# EUROPEAN PATENT APPLICATION

(11) **EP 4 296 508 A1**
(43) Date of publication of application: **27.12.2023**
(21) Application number: 22179857.2
(22) Date of filing: 20.06.2022
(51) Int. Cl.: F03D 80/70, F16C 17/03, F16C 35/02, F03D 7/02, F03D 80/50, F16C 17/02, F16C 41/00

(54) **FLUID BEARING COMPRISING A BRAKE ASSEMBLY**

(71) Applicant: Siemens Gamesa Renewable Energy A/S, 7330 Brande (DK)
(72) Inventor: Jensen, Simon Vyff, 7160 Tørring (DK)
(74) Representative: SGRE-Association

(57) **Abstract**

The invention relates to a fluid bearing (5) configured to rotatably couple a hub (1) to a rotor (2) of a generator (3) of a wind turbine to allow a rotation of the hub (1) and the rotor (2) about a longitudinal axis (X). The fluid bearing (5) according to the invention comprises a first bearing ring (20) comprising a sliding surface (22), a second bearing ring (21), and a plurality of bearing pads (12) arranged between the first bearing ring (20) and the second bearing ring (21), wherein the bearing pads (12) are coupled to the second bearing ring (21) and are configured to slide on the sliding surface (22) of the first bearing ring (20) in such a way that the first bearing ring (20) and the second bearing ring (21) are movable relative to each other about the longitudinal axis (X) .

## Description

The present invention relates to a fluid bearing for a wind turbine. The present invention further relates to a method for replacing bearing pads of a fluid bearing.

Wind turbines are increasingly used for the generation of electrical energy. A wind turbine comprises a tower and a nacelle mounted on the tower, to which a hub is attached. The hub and coupled to a generator. A plurality of blades extends from the hub. The blades are oriented in such a way that wind passing over the blades turns the hub, thereby driving the generator. Hence, the rotational energy of the blades is transferred to the generator, which then converts the mechanical energy into electricity and transfers the electricity to the electrical grid.

The most common wind turbines comprise a horizontal axis in which the hub is coupled to a rotor of the generator by means of a horizontal drive shaft and a gearbox housed in the nacelle. The gearbox, in addition to being expensive, is an element that requires regular maintenance and a fair amount of space in the nacelle.

To solve this problem, direct drive wind turbines have been developed, such as the one described in WO 01/21956 A1, EP 084748 A1 , EP 1394406 A2 , EP 1783363 A1 and DE 4415570 A1. In direct drive wind turbines, the hub is directly coupled to the generator without the use of a gearbox. The chain of mechanically connected parts leading from the hub of the wind turbine to the rotor at the generator is called the drive train of the wind turbine.

To allow the rotational movement and to provide the necessary stability of the rotating parts, the drive train is mounted with at least one bearing. This bearing allows the drive train to rotate. At the same time, it provides the necessary stability by supporting the radial and axial loads and the bending moments present in the drive train.

A fluid film bearing, also known as fluid bearing, is a bearing that carries a rotating component via a fluid film formed by the rotation of the bearing ring. Such a fluid bearing exhibits higher withstand load performance in comparison with a rolling bearing and is also superior in vibration damping and impact resistance. For this reason, fluid bearings are widely employed in the main bearing of the wind turbines. Hence, a fluid bearing may be used to support the shaft connecting the hub with the generator. The fluid film bearing typically comprises a plurality of bearing pads radially distributed around the axis of rotation of the rotating shaft. The fluid film supporting the shaft is formed between a raceway of the fluid film bearing and the bearing pads. Each bearing pad can be arranged in a bearing pad seat for support and alignment. An example of a fluid film bearing for the supporting the main shaft of a wind turbine can be found in WO 2011/003482 A2.

There are periods of time when the generator is not connected to the electrical grid and cannot therefore transfer the generated energy out of the wind turbine. This is the case during the idling period between the installation and connection to the grid or after the end of life of the wind turbine when the wind turbine is disconnected from the grid and decommissioned. An idling period can also occur during maintenance and repairment tasks or due to a problem in the drive train.

During idling, the fatigue of the wind turbine components increases due to the increased accumulated energy in the wind turbine, as the generator does not act as a "brake" and does not convert the mechanical energy into electricity, as the electricity cannot be delivered to the grid.

One of the parts which is highly affected by the idling of the wind turbine are fluid film bearings. Idling greatly reduces the lifetime of the bearing due to the reduced speed of the rotating parts, which results in an increase of wear on the bearing pads due to an insufficient lubrication, as no fluid film can be formed.

Current wind turbines comprise a braking system to brake the rotation at the main bearing and avoid a damage of the fluid film bearing during idling. A typical braking system of wind turbines comprises a brake disk, a caliper with brake pads, brake support plates and a hydraulic piping system to feed the calipers. During braking operation, the caliper presses the brake pads onto the surface of the rotor disk, thus reducing the rotor speed of the wind turbine and producing heat. A problem about this solution is that brake dust from the brake pads can be released within the generator. In addition, this solution requires more components which are also expensive, such as the calipers. In addition, space is needed for arranging such a braking system, which is limited due to the increasing size of modern wind turbines.

It is an object of the invention to provide a fluid bearing which overcomes the problems known in the prior art, in particular during idling.

This is achieved by a fluid bearing according to claim 1 and a method for replacing bearing pads of a fluid bearing according to claim 12.

According to the invention, a fluid bearing configured to rotatably couple a hub to a rotor of a generator of a wind turbine to allow a rotation of the hub and the rotor about a longitudinal axis comprises a first bearing ring comprising a sliding surface, a second bearing ring, and a plurality of bearing pads arranged between the first bearing ring and the second bearing ring, wherein the bearing pads are coupled to the second bearing ring and are configured to slide on the sliding surface of the first bearing ring in such a way that the first bearing ring and the second bearing ring are movable relative to each other about the longitudinal axis.

The fluid bearing rotatably supports the hub and the rotor of the generator.

The plurality of bearing pads is mounted on the surface of the second bearing ring and distributed on a surface of the second bearing ring facing the sliding surface of the first bearing ring so as to support the second bearing ring on the first bearing ring.

The bearing pads comprise a contact surface configured to slide on the sliding surface of the first bearing ring, as well as a coupling part for coupling the bearing pad to the second bearing ring.

According to the invention, the fluid bearing further comprises a brake assembly coupled to the second bearing ring, wherein the brake assembly comprises at least one brake pad configured to frictionally engage with the sliding surface by pressing on said sliding surface, thereby braking the rotation of the fluid bearing, wherein the brake pad is configured to at least partly support the first bearing ring to allow the replacement of bearing pads by exerting a force on the sliding surface.

By arranging the brake assembly in such a way that the brake pads engage with the sliding surface, the fluid bearing can be built in a more compact way than the known braking systems comprising a brake disc, brake support plates and calipers. The solution proposed according to the invention allows for a more compact design which less components needed for braking the rotation of the bearing. In addition, the brake assembly according to the invention is also suitable to support at least a part of the weight of the bearing during idling and/or during braking, thereby preventing standstill marks on the sliding surface of the first bearing ring. Such standstill marks can eventually lead to failure of the fluid bearing. In addition, this support allows to replace worn bearing pads and accomplish maintenance tasks on the bearing pads while the brake pads are frictionally engaged with the sliding surface and exert a force on the sliding surface.

According to a preferred embodiment of the invention, the first bearing ring is an outer ring, and the second bearing ring is an inner ring, wherein the outer ring is configured to be mounted on the inner ring in such a way that the outer ring and the inner ring are movable relative to each other about the longitudinal axis.

According to another preferred embodiment of the invention, the first bearing ring is an inner ring, and the second bearing ring is an outer ring, wherein the outer ring is configured to be mounted on the inner ring in such a way that the outer ring and the inner ring are movable relative to each other about the longitudinal axis.

According to another preferred embodiment of the invention, the first bearing ring is rigidly coupled to the rotor.

The first bearing ring can be coupled to both the hub and the rotor of the generator and support the rotational movement of both components on the first bearing ring by means of the sliding surface and the plurality of bearing pads.

According to another preferred embodiment of the invention, the second bearing ring is rigidly coupled to the rotor.

The second bearing ring can be coupled to both the hub and the rotor of the generator and support the rotational movement of both components on the second bearing ring by means of the sliding surface and the plurality of bearing pads. According to another preferred embodiment of the invention, at least a part of the bearing pads are radial bearing pads. The contact surface of the radial bearing pads is configured to contact the sliding surface of the first bearing ring in the radial direction, thereby allowing a radial support of the weight.

According to another preferred embodiment of the invention, at least a part of the bearing pads are axial bearing pads. These pads are so-called thrust bearing pads, where the contact surface of the axial bearing pads is configured to contact the sliding surface of the first bearing ring in the axial direction, i.e., parallelly to the longitudinal axis of the fluid bearing, thereby allowing an axial support of the weight.

According to another preferred embodiment of the invention, at least a part of the bearing pads is arranged at an angle to the sliding surface with respect to the longitudinal axis of the fluid bearing. The pad contact surfaces can e.g., be arranged at an angle of 30° to 60°, e.g., at an angle of approximately 45° to the radial direction. By choosing this angle the relative amount of radial and axial support can be adjusted. It is noted that the pad contact surfaces can typically be tilted slightly, e.g., by less than 1° or 5°, with respect to the coupling part at the second bearing ring to allow for more flexibility and an improved support between the pad and the sliding surface of the first bearing ring. This allows for a simple alignment of the first bearing ring to the second bearing ring.

According to another preferred embodiment of the invention, the first bearing ring of the fluid bearing comprises further sliding surfaces for the different types of bearing pads, such as axial and/or radial bearing pads. It is noted that if a plurality of different bearing pads is comprised in the fluid bearing, i.e., axial and radial or radial and axial at both axial surfaces of the ring, then further sliding surfaces can be required at the first bearing ring.

According to another preferred embodiment of the invention, the fluid bearing is a tapered bearing. In particular, the bearing comprises a V-shaped arrangement of two sliding surfaces, which are tilted and arranged in a way that they are reversely sloped in axial direction in respect to the axis of rotation of the generator.

According to another preferred embodiment of the invention, the brake assembly further comprises at least one activation device, such as a hydraulic actuator, coupled to the brake pad for shifting the brake pad with respect to the sliding surface.

The activation device is configured to push the brake pad for frictionally engaging the brake pad with the sliding surface. The activation device can be a linear actuator.

The activation device can be a mechanical or an electromechanical linear actuator driven by an internal or an external power source, such as a motor , or by hand, such as by a screw, whereby a worker of the wind turbine has to manually turn the screw for the latter case.

The activation device can be a hydraulic actuator using pressurized hydraulic fluid, such as oil. Hydraulic actuators are advantageous for a precise control of the shifting of the brake pad; however, they might require a fluid reservoir and a motor and a pump. A hydraulic cylinder is a type of hydraulic actuator.

The activation device can be a pneumatic actuator using pressurized gas, such as air.

The activation device can be a piezoelectric actuator using voltage to expand a material, such as ceramic.

According to another preferred embodiment of the invention, the second bearing ring comprises at least a hole for supplying the activation device with hydraulic fluid for frictionally engaging the brake pad with the sliding surface.

According to another preferred embodiment of the invention, each bearing pad is arranged at a bearing pad seat. The bearing pad seat can be provided in the second bearing ring. An elastomer can be interposed between the respective seat and the respective bearing pad for allowing tilting of the respective bearing pad.

According to another preferred embodiment of the invention, at least one bearing pad seat comprises an opening for allowing the replacement of the bearing pad. Through the opening, the worn bearing pad can be shifted and replaced by a new bearing pad.

According to another preferred embodiment of the invention, a cover covers the opening of the at least one bearing pad seat. The cover is opened to gain access to the opening. The opening is a through hole from the outer surface of the second bearing ring to the inner surface of the second bearing ring.

According to another preferred embodiment of the invention, at least one bearing pad seat is removable for allowing the replacement of the bearing pad. The bearing pad can thus be removed, thereby providing an opening through which the worn bearing pad can be shifted and replaced by a new bearing pad.

According to another preferred embodiment of the invention, the brake assembly comprises a piston, wherein the brake pad is coupled to said piston. The piston is displaceable along an axis, whereby during the stroke displacing the piston, the brake pad is shifted towards or away from the sliding surface to engage or disengage with the sliding surface.

Yet another aspect of the invention relates to a method for replacing bearing pads of a fluid bearing, said fluid bearing being configured to rotatably couple a hub to a rotor of a generator of a wind turbine to allow a rotation of the hub and the rotor about a longitudinal axis and comprising a first bearing ring comprising a sliding surface, a second bearing ring, and a plurality of bearing pads arranged between the first bearing ring and the second bearing ring, wherein the bearing pads are coupled to the second bearing ring and are configured to slide on the sliding surface of the first bearing ring in such a way that the first bearing ring and the second bearing ring are movable relative to each other about the longitudinal axis, wherein the fluid bearing further comprises a brake assembly coupled to the second bearing ring, wherein the brake assembly comprises at least one brake pad configured to frictionally engage with the sliding surface by pressing on said sliding surface, thereby braking the rotation of the fluid bearing, wherein the brake pad is configured to at least partly support the first bearing ring to allow the replacement of bearing pads by exerting a force on the sliding surface.

The method comprises the steps of frictionally engaging the brake pad to the sliding surface so that the first bearing ring is at least partly supported by the brake pad, replacing the bearing pad, and disengaging the brake pad from the sliding surface. Hence, the weight can be at least partly supported by the brake pad, which reliefs pressure on the bearing pads and allows the replacement of bearing pads.

According to another preferred embodiment of the invention, the brake pad is engaged and disengaged by actuating a hydraulic actuator. A hydraulic actuator uses pressurized hydraulic fluid, such as oil, for shifting the brake pad. Hydraulic actuators are advantageous for a precise control of the shifting of the brake pad.

According to another preferred embodiment of the invention, the second bearing ring comprises at least a hole, wherein the hydraulic actuator is actuated by supplying hydraulic fluid through the hole.

According to another preferred embodiment of the invention, the bearing pad is arranged at a bearing pad seat comprising an opening, wherein the bearing pad is replaced through the opening.

In order to facilitate the understanding of the characteristics of the invention and being an integral part of this specification, some drawing sheets are attached on which fig-ures, with an illustrative but not limiting character, the following is represented:
- FIG 1: shows a wind turbine with a fluid film bearing.
- FIG 2: shows a fluid bearing.
- FIG 3: shows another fluid bearing.
- FIG 4: shows a cut through the second bearing ring of a fluid bearing.

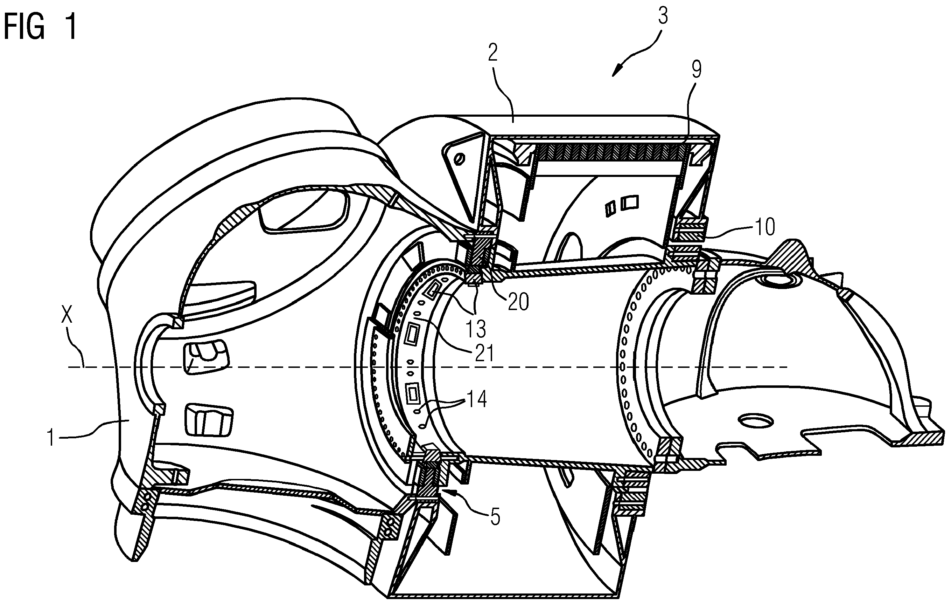

FIG 1 shows a longitudinal cut through the hub 1, the fluid bearing 5 and the generator 3 of a direct driven wind turbine. The longitudinal cut is going along the axis of rotation of the generator 3, which is the longitudinal axis X of the wind turbine.

The hub 1 is connected to the rotor 2 of the generator 3 and to the first bearing ring 20, which is the rotating side of the fluid bearing 5 and rotates with respect to the second bearing ring 21 about the longitudinal axis X. The stator 9 of the generator 3 is connected to the second bearing ring 21, which is the stationary side of the fluid bearing 5.

The fluid bearing 5 is located between the hub 1 of the wind turbine and the generator 3 of the wind turbine. Hence, the fluid bearing 5 is connected with the stationary side to the stator 9 of the generator 3 and with the rotating side to the hub 1 of the wind turbine and to the rotor 2 of the generator 3. The fluid bearing 5 connects the rotating drive train of the wind turbine with the stationary part of the wind turbine in a rotatable manner.

The rotating drive train comprises the hub 1 of the wind turbine that is connected to the rotor 2 of the generator 3. The stationary part of the wind turbine comprises the stator 9 of the generator 3.

The fluid bearing 5 is constructed to bear the radial and axial forces and the bending moments present in the drive train. For this, the fluid bearing comprises axial and radial bearing pads 12 configured to support axial and radial loads. The first bearing ring 20 comprises a cylindrical radial sliding surface 22 for the radial bearing pads 12 and two further axial sliding surfaces for the axial bearing pads 12. The bearing pads 12 are attached to the second bearing ring 21 and will slide along the inner surface 22 of the first bearing ring 20, which is the sliding surface 22 of the fluid bearing 5.

The bearing pads 12 are arranged in bearing pad seats 13 for support and alignment of the bearing pads 12. The bearing pad seats 13 are provided in the second bearing ring 21.

The second bearing ring 21 further comprises a plurality of holes 14 for supplying the activation device with hydraulic fluid for frictionally engaging the brake pads 15, which are arranged between the first bearing ring 20 and the second bearing ring 21, with the sliding surface 22.

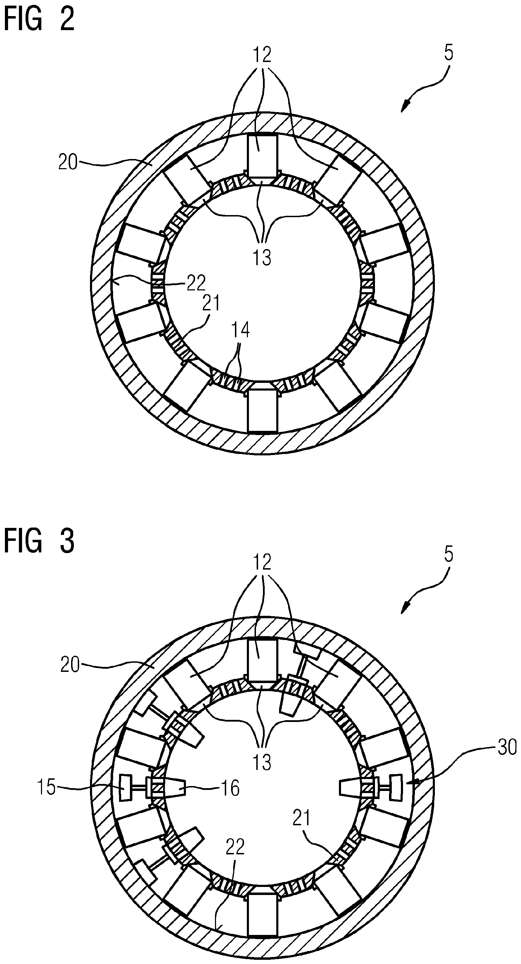

FIG 2 shows a fluid bearing 5 comprising a first bearing ring 20 comprising a sliding surface 22, a second bearing ring 21, and a plurality of bearing pads 12 arranged between the first bearing ring 20 and the second bearing ring 21, wherein the bearing pads 12 are coupled to the second bearing ring 21 and are configured to slide on the sliding surface 22 of the first bearing ring 20 in such a way that the first bearing ring 20 and the second bearing ring 21 are movable relative to each other about the longitudinal axis X. The bearing pads 12 are arranged on bearing pad seats 13 at the second bearing ring 21.

The second bearing ring 21 further comprises a plurality of holes 14, which can be used for lubrication or for inserting supports for the second bearing ring 21 during the replacement of bearing pads 12.

FIG 3 shows the fluid bearing 5 of FIG 2 and further comprises a braking assembly 30 coupled to the second bearing ring 21, wherein the brake assembly 30 comprises a plurality of brake pads 15 configured to frictionally engage with the sliding surface 22 by pressing on said sliding surface 22, thereby braking the rotation of the fluid bearing 5. In the figure, some of the brake pads 15 are frictionally engaged with the sliding surface 22, whereas others are disengaged from the sliding surface 22. Depending on the level of support needed, the number of brake pads 15 engaging the sliding surface 22 can be adjusted. The brake pads 15 are each coupled to a hydraulic actuator 16 for shifting the brake pad 15 with respect to the sliding surface 22.

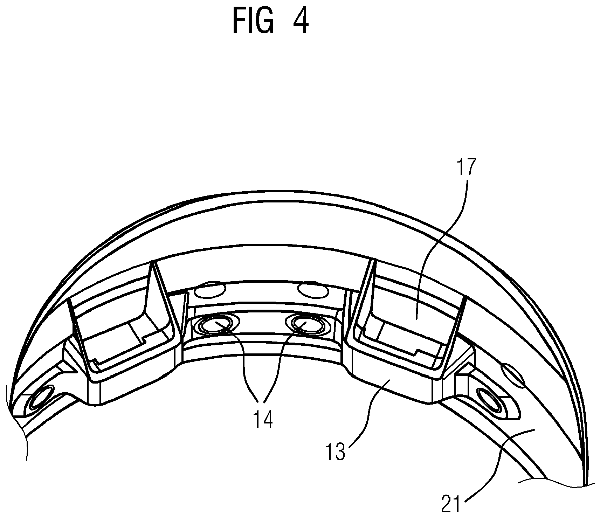

FIG 4 shows a cut through the second bearing ring 21 of the fluid bearing 5 shown in FIG 2 and FIG 3. The bearing pad seats 13 comprise an opening 17 for allowing the replacement of the bearing pads 12. Through the opening 17, the worn bearing pad 12can be shifted and replaced by a new bearing pad 12.

### Reference numbers

- 1: Hub
- 2: Rotor
- 3: Generator
- 5: Fluid bearing
- 9: Stator
- 10: Secondary bearing
- 12: Bearing pad
- 13: Bearing pad seat
- 14: Hole
- 15: Brake pad
- 16: Hydraulic actuator
- 17: Opening

- 20: First bearing ring
- 21: Second bearing ring
- 22: Sliding surface

- 30: Brake assembly

- X: Longitudinal axis

## Claims

1. A fluid bearing (5) configured to rotatably couple a hub (1) to a rotor (2) of a generator (3) of a wind turbine to allow a rotation of the hub (1) and the rotor (2) about a longitudinal axis (X), said fluid bearing (5) comprising a first bearing ring (20) comprising a sliding surface (22), a second bearing ring (21), and
a plurality of bearing pads (12) arranged between the first bearing ring (20) and the second bearing ring (21),
wherein the bearing pads (12) are coupled to the second bearing ring (21) and are configured to slide on the sliding surface (22) of the first bearing ring (20) in such a way that the first bearing ring (20) and the second bearing ring (21) are movable relative to each other about the longitudinal axis (X),
**characterized in that** said fluid bearing (5) further comprises a brake assembly (30) coupled to the second bearing ring (21), wherein the brake assembly (30) comprises at least one brake pad (15) configured to frictionally engage with the sliding surface (22) by pressing on said sliding surface (22), thereby braking the rotation of the fluid bearing (5), wherein the brake pad (15) is configured to at least partly support the first bearing ring (20) to allow the replacement of bearing pads (12) by exerting a force on the sliding surface (22).

2. The fluid bearing (5) according to claim 1, wherein the first bearing ring (20) is an outer ring, and the second bearing ring (21) is an inner ring, wherein the outer ring is configured to be mounted on the inner ring in such a way that the outer ring and the inner ring are movable relative to each other about the longitudinal axis (X).

3. The fluid bearing (5) according to claim 1, wherein the first bearing ring (20) is an inner ring, and the second bearing ring (21) is an outer ring, wherein the outer ring is configured to be mounted on the inner ring in such a way that the outer ring and the inner ring are movable relative to each other about the longitudinal axis (X).

4. The fluid bearing (5) according to any of the preceding claims, wherein the first bearing ring (20) is rigidly coupled to the rotor (2).

5. The fluid bearing (5) according to any of the claims 1 to 3, wherein the second bearing ring (21) is rigidly coupled to the rotor (2).

6. The fluid bearing (5) according to any of the preceding claims, wherein the brake assembly (30) further comprises at least one activation device, such as a hydraulic actuator (16), coupled to the brake pad (15) for shifting the brake pad (15) with respect to the sliding surface (22).

7. The fluid bearing (5) according to claim 6, wherein the second bearing ring (21) comprises at least a hole (14) for supplying the activation device with hydraulic fluid for frictionally engaging the brake pad (15) with the sliding surface (22).

8. The fluid bearing (5) according to any of the preceding claims, wherein each bearing pad (12) is arranged at a bearing pad seat (13).

9. The fluid bearing (5) according to claim 8, wherein at least one bearing pad seat (13) comprises an opening (17) for allowing the replacement of the bearing pad (12).

10. The fluid bearing (5) according to claim 8 or 9, wherein at least one bearing pad seat (13) is removable for allowing the replacement of the bearing pad (12).

11. The fluid bearing (5) according to any of the preceding claims, wherein the brake assembly (30) comprises a piston, wherein the brake pad (15) is coupled to said piston.

12. Method for replacing bearing pads (12) of a fluid bearing (5) according to any of the preceding claims, the method comprising the steps of:
- frictionally engaging the brake pad (15) to the sliding surface (22) so that the first bearing ring (20) is at least partly supported by the brake pad (15),
- replacing the bearing pad (12), and
- disengaging the brake pad (15) from the sliding surface (22) .

13. Method according to claim 12, wherein the brake pad (15) is engaged and disengaged by actuating a hydraulic actuator (16) .

14. Method according to claim 13, wherein the second bearing ring (21) comprises at least a hole (14), wherein the hydraulic actuator (16) is actuated by supplying hydraulic fluid through the hole (14).

15. Method according to any of the claims 12 to 14, wherein the bearing pad (12) is arranged at a bearing pad seat (13) comprising an opening (17), wherein the bearing pad (12) is replaced through the opening (17).
